# EUROPÄISCHE PATENTANMELDUNG

(11) **EP 1 884 496 A2**
(43) Veröffentlichungstag der Anmeldung: **06.02.2008**
(21) Anmeldenummer: 07111794.9
(22) Anmeldetag: 05.07.2007
(51) Int. Cl.: C02F 3/22, C02F 3/12

(54) **Belüftungseinrichtung für ein Belebungsbecken**

(30) Priorität: 24.07.2006 DE 102006034187
(71) Anmelder: SIEMENS AKTIENGESELLSCHAFT, 80333 München (DE)
(72) Erfinder: Müller, Bernd, 85368, Moosburg (DE); Strätz, Klaus, 96191, Viereth-Trunstadt (DE)

(57) **Zusammenfassung**

Belüftungseinrichtung (1) für ein Belebungsbecken einer Abwasserreinigungsanlage, umfassend ein eine unprofilierte Innenwand (12) aufweisendes Rohr (4), das über einen oder mehrere Halter (5) mit seinem unteren Ende (11) beabstandet zum Beckenboden (2) aufstellbar ist, sowie wenigstens eine Luftzufuhrleitung (7), die unterhalb des Rohres (4) oder im Rohr (4), benachbart zu dessen unterem Ende (11), mündet.

## Beschreibung

Die Erfindung betrifft eine Belüftungseinrichtung für ein Belebungsbecken einer Abwasserreinigungsanlage.

In einer aeroben biologischen Abwasserreinigungsanlage, die beispielsweise einer der Herstellung eines beliebigen Produkts dienenden Anlage, vorzugsweise bei der Papierherstellung. bei der zu reinigendes Abwassers anfällt, nachgeschaltet sein kann, muss für den Abbau der im Abwasser gelösten Kohlenstoffverbindungen dem Belebtschlamm, der Mikroorganissmen enthält, Sauerstoff zugeführt werden. Dieser kann als reiner Sauerstoff oder als Umgebungsluft unter Turbulenz in das Abwasser eingetragen werden und so teilweise in Lösung gehen. Hierzu werden Leitungen am Beckenboden verlegt, über die beispielsweise die Luft in das Abwasser und den Belebtschlamm eingeblasen wird. Um den Abbau der Kohlenstoffverbindungen möglichst schnell, effektiv und vollständig vonstatten gehen zu lassen, ist eine möglichst schnelle Anreicherung des Schlamms oder des Wassers mit Sauerstoff zweckmäßig, was über die eine oder die mehreren beckenbodenseitig verlegten Leitungen nicht möglich ist.

Der Erfindung liegt damit das Problem zugrunde, eine Belüftungseinrichtung anzugeben, die bei möglichst einfacher Konstruktion eine verbesserte Vermischung des Abwassers und Belebtschlamms mit dem zugeführten gasförmigen Medium ermöglicht.

Zur Lösung dieses Problems ist erfindungsgemäß eine Belüftungseinrichtung vorgesehen, umfassend ein eine unprofilierte Innenwand aufweisendes Rohr, das über einen oder mehrere Halter mit seinem unteren Ende beabstandet zum Beckenboden aufstellbar ist, sowie wenigstens eine Luftzufuhrleitung, die unterhalb des Rohres oder im Rohr, benachbart zu dessen unterem Ende, mündet.

Die erfindungsgemäße Belüftungseinrichtung zeichnet sich durch ein einfaches, im Querschnitt bevorzugtes zylindrisches Rohr aus, das an seiner Innenwand vollkommen unprofiliert ist. In ihm sammelt sich, wenn die Belüftungseinrichtung am Boden über entsprechende Halter fixiert ist, das Wasser-Schlamm-Gemisch. Unterhalb des Rohres oder benachbart zum unteren Rohrende im Rohr mündet eine Luftzufuhrleitung, wobei hierüber selbstverständlich auch reiner Sauerstoff zugeführt werden könnte. Die abgegebene Luft wird nun von unten in das Rohr eingeperlt. Das im Rohr befindliche Wasser-Schlamm-Gemisch wird so unter starker Turbulenz intensiv mit der eingebrachten Luft in Kontakt gebracht, nachdem sich im Rohr ein seitlich geschlossenes Volumen ergibt, innerhalb dem die Luft eingeperlt wird und intensiv weil zur Seite hin begrenzt mit dem im vorhandenen Schlamm-Wasser-Volumen vermischt wird. Es ergibt sich hierbei ein Mammutpumpeneffekt, das heißt, die Dichte der Schlamm-Wasser-Säule im Belüftungsrohr sinkt infolge der Belüftung, es bildet sich eine Druckdifferenz aus, die nach oben perlende Luft bewirkt, dass von unten stets noch nicht behandeltes Schlamm-Wasser-Gemisch nachgezogen wird. Infolge der kontinuierlichen Luftzufuhr erfolgt also eine kontinuierliche Umwälzung bei gleichzeitig deutlich verbesserter Vermischung der eingeperlten Luft oder des eingeperlten Sauerstoffs mit dem zu behandelnden Abwasser, so dass der zugeführte Sauerstoff wesentlich besser und schneller in Lösung gehen kann und der Abbau der Kohlenstoffverbindungen effektiver erfolgen kann.

Die erfindungsgemäße Belüftungseinrichtung ist extrem einfach konzipiert, nachdem sie sich lediglich durch ein einfaches, im Querschnitt vorzugsweise zylindrisches und bevorzugt auch gerades Rohr, das in der Montagestellung vertikal angeordnet ist, auszeichnet. Es sind am Rohr keinerlei zusätzliche Vorkehrungen getroffen, abgesehen von den Haltern, die bevorzugt als am Rohr befestigte Standfüße ausgebildet sind, über welche das Rohr fest am Beckenboden verankert wird.

Das Rohr ist wie ausgeführt im Querschnitt bevorzugt zylindrisch, so dass sich keine Kantenbereiche ergeben, die sich gegebenenfalls zusetzen könnten, und sich der effektive Rohrquerschnitt im Laufe des Betriebs verringern würde. Die Belüftungseinrichtung ist, nachdem ein an der Innenwand unprofiliertes Rohr, das wie ausgeführt vorzugsweise im Querschnitt zylindrisch ist und gerade ausgeführt ist, damit verstopfungsfrei. Das Rohr selbst wie natürlich auch seine Halter etc. sind aus einem rostfreien Edelstahl gebildet, so dass insgesamt die erfindungsgemäße Belüftungseinrichtung äußerst wartungsarm ist.

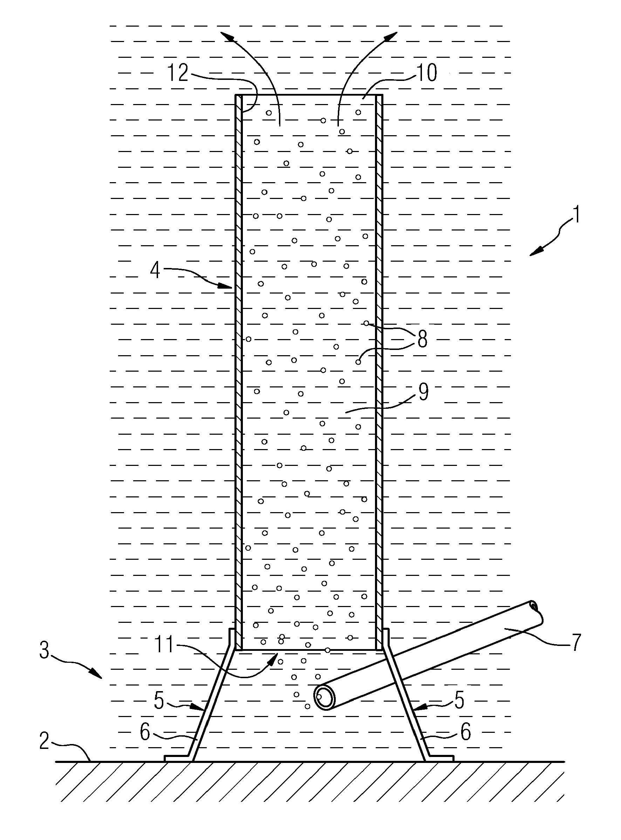

Aus der Figur ergibt sich ein Ausführungsbeispiel einer erfindungsgemäßen Belüftungseinrichtung 1, umfassend ein im Querschnitt zylindrisches, in der gezeigten Montagestellung am Boden 2 eines Belebungsbeckens 3 vertikal stehendes Rohr 4. Das Rohr 4 aus Edelstahl ist wie beschrieben zylindrisch und an seiner Innenwand 12 nicht profiliert, es handelt sich um einen einfachen handelsüblichen Rohrabschnitt, der in seiner Länger entsprechend dimensioniert ist, beispielsweise ca. 1 Meter, so dass eine hinreichende Länge der in ihm befindlichen Wasser-Schlamm-Säule gegeben ist. Am Rohr 4 sind im gezeigten Beispiel mehrere Halter 5 in Form einzelner Standfüße 6 befestigt, über die die Belüftungseinrichtung 1 beziehungsweise das Rohr 4 am Beckenboden 2 verankert wird. Am Beckenboden 2 wird eine Luftleitung 7 (über die Luftleitung 7 kann natürlich auch reiner Sauerstoff zugeführt werden) zu dem Rohr 4 geführt. Die Luftleitung 7 endet im gezeigten Beispiel unterhalb des unteren Endes des Rohres 4. An ihrem offenen Ende, an dem beispielsweise noch ein Diffusor sein kann, strömt zugeführt Luft aus und perlt, wie durch die Luftblasen 8 angedeutet ist, in das Innere des Rohres. Im Rohrinneren befindet sich wie ausgeführt eine Wasser-Schlamm-Gemisch-Säule 9, nachdem das Belebungsbecken 3 mit einem aerob zu behandelnden Wasser-Schlamm-Gemisch zum Abbau der gelösten Kohlenstoffverbindungen gefüllt ist. Die eingeperlte Luft perlt nun durch die Wasser-Schlamm-Säule 9 nach oben, so dass sich die Dichte der Säule 9 im Rohr 4 verglichen zum unbelüfteten Außenbereich ändert. Es kommt infolge dessen und dem Einperleffekt beziehungsweise den nach oben steigenden Luftbläschen 8 zur Ausbildung eines Mammutpumpeneffekts. Aus dem oberen Ende 10 tritt, wie durch die beiden Pfeile dargestellt ist, mit zugeführter Luft vermischtes Abwasser-Schlamm-Gemisch aus dem Rohr 4 aus, während gleichzeitig vom unteren Ende 11 her unbehandeltes Wasser-Schlamm-Gemisch wieder in das Rohrinnere gezogen wird. Dort wird es umgehend wieder mit der kontinuierlich zugeführten Luft vermischt. Der Mischeffekt ist bei der erfindungsgemäßen Belüftungseinrichtung 1 sehr gut, nachdem das Rohr 4 die Luftausbreitungsrichtung radial begrenzt, so dass sich die eingeperlte Luft lediglich mit der im Rohr befindlichen Säule vermischen kann. Es kommt dort zu einer sehr intensiven, stark turbulenten Vermischung und zugeführter Sauerstoff, sei es in reiner Form oder aus der Luft, kann sich sehr gut in dem Gemisch anreichern und teilweise in Lösung gehen.

Infolge der gegebenen kontinuierlichen Umwälzung kann ein beachtliches Volumen in kurzer Zeit intensiv mit zugeführter Luft vermischt werden, so dass der Abbauprozess zügig und effektiv vonstatten gehen kann.

## Patentansprüche

1. Belüftungseinrichtung (1) für ein Belebungsbecken einer Abwasserreinigungsanlage, umfassend ein eine unprofilierte Innenwand (12) aufweisendes Rohr (4), das über einen oder mehrere Halter (5) mit seinem unteren Ende (11) beabstandet zum Beckenboden (2) aufstellbar ist, sowie wenigstens eine Luftzufuhrleitung (7), die unterhalb des Rohres (4) oder im Rohr (4), benachbart zu dessen unterem Ende (11), mündet.

2. Belüftungseinrichtung (1) nach Anspruch 1,
**dadurch gekennzeichnet, dass** das Rohr (4) im Querschnitt zylindrisch ist.

3. Belüftungseinrichtung (1) nach Anspruch 1 oder 2,
**dadurch gekennzeichnet, dass** das Rohr (4) gerade ist.

4. Belüftungseinrichtung (1) nach einem der vorangehenden Ansprüche, **dadurch gekennzeichnet, dass** ein Halter (5) als am Rohr (4) befestigter Standfuß (6) ausgebildet ist.
